Europäisches Patentamt

European Patent Office

Office européen des brevets

(11) Publication number: **0 524 159 B1**

(12) **EUROPEAN PATENT SPECIFICATION**

(45) Date of publication of patent specification: **11.10.95**

(51) Int. Cl.6: **C02F 1/04**, B01D 1/14, C02F 9/00

(21) Application number: **92830391.6**

(22) Date of filing: **16.07.92**

(54) **Method and associated plant for the disposal of the liquid from the bottom of dumping tanks for solid urban refuse.**

(30) Priority: **19.07.91 IT MO910109**
**19.07.91 IT MO910110**

(43) Date of publication of application:
**20.01.93 Bulletin 93/03**

(45) Publication of the grant of the patent:
**11.10.95 Bulletin 95/41**

(84) Designated Contracting States:
**AT BE CH DE DK ES FR GB GR IT LI NL PT SE**

(56) References cited:
**EP-A- 0 094 547**
**DD-A- 260 056**
**FR-A- 2 609 013**
**US-A- 3 789 902**
**US-A- 4 052 255**

(73) Proprietor: **TECHNAIR s.r.L. IMPIANTI TEC-NOLOGICI - MODENA**
**Via Emilia est n. 1479**
**I-41100 Modena (IT)**

(72) Inventor: **Bortolani, Giuseppe**
**Via Riva del Garda n. 84**
**I-41100 Modena (IT)**
Inventor: **Bonicelli Ivo Domenico**
**Via Canale n. 64**
**I-42013 Casalgrande (Reggio Emilia) (IT)**

(74) Representative: **Coppi, Cecilia**
**Via Oblach No. 1**
**I-40141 Bologna (IT)**

EP 0 524 159 B1

## Description

The invention relates to a method and associated plant in accordance with the method for the disposal of the liquid from the bottom of dumping tanks for solid urban refuse, namely a process and assemblage of equipment for the treatment of the liquid residue, or 'percolate' as it is known, which becomes deposited at the bottom of containers, either natural or artificial, for solid urban refuse.

In the processes known from the prior art for the treatment of percolate, the liquid, extracted from the refuse collecting tanks by means of drainage tubes, is introduced into suitable purification equipment from which is extracted a dry residue for subsequent incineration: the said liquid consisting of mixtures of the most varied substances or compounds, both organic and inorganic, arising from reactions of the most varied nature, for example physico-chemical, biological or other which have occurred due to the mixing together of or heterogenous and chance contact between the refuse in the said tanks, into which is also collected and indeterminable quantity of water arising from atmospheric precipitation or also from surface infiltration or from condensation of the water vapour contained in the atmosphere or from other sources.

Also known is treatment consisting of direct combustion of the percolate in incineration plants used for the thermal destruction of solid refuse.

Moreover, chemical plants for the purification of the percolate have high setting up and running costs; as for direct combustion of the percolate, it must be said that the high temperatures used, due inter alia to the necessity of not releasing harmful compounds, thus from the order of 950°C and up to 1200°C and above, maintained for a period of time of not less than 2 seconds with a flue gas velocity in excess of 10 m/s, bring about the thermal destruction of all the pollutants contained in the liquid, so causing, in particular, the deleterious release into the flue gases, in free or combined form, of the toxic metals usually contained in the liquid, such as for example mercury, zinc, tin, copper, lead with the consequent requirement to filter the flue gases themselves in order to avoid the release of the pollutants into the atmosphere; this being achieved, for example, by means of wet filters of the milk of lime type, textile filters, electrical filters; all this bringing with it considerable complications for the plant and consequent high costs; furthermore the considerable operating temperatures dictate the use of costly materials for lining the combustion chambers of the incineration furnaces and of sophisticated auxiliary and control equipment for the associated disposal process.

Patent EP-A-0094547 utilizes a plant which comprises vacuum and/or multistage rectifying columns for percolate evaporation, heat exchangers for heat yield to the percolate, and a condensed liquid removal system for vapour extraction.

Such prior art is open to considerable improvement with respect to the possibility of eliminating the disadvantages mentioned above.

The aim of the present invention is to allow the realisation of a treatment method for the percolate, which method proceeds according to the following stages:

A) Drawing off the liquid consisting of the already settled percolate and concentration of said liquid through mixing with a stream of hot air that causes the evaporation of water as well as of volatile organic substances dissolved into the percolate.

B) Separation of the percolate concentrated in this manner from the saturated air containing water vapours and vapours of organic substances for the subsequent oxidation of these latter substances in a suitable combustion chamber and return of the concentrated percolate to the bottom of the dumping tank where the settling out proceeds.

C) Extraction of the residual sludge deposited during settling of the percolate for subsequent dispatch to toxic waste storage facilities, the heavier pollutants having been concentrated in the sludge.

Oxidation of the vapours of the organic substances can occur at ambient temperature when the presence of the associated emissions in the atmosphere can be tolerated; the said vapours may also be oxidized by combustion at temperatures indicatively between 150°C and 500°C, by means of using a liquid or gaseous fuel, such as for example biogas, advantageously produced on site by anaerobic fermentation of organic refuse.

In the case of oxidation by combustion of the said vapours of organic substances, recirculation of the flue gases is advantageously provided for, dependent on the thermal regime predetermined by the combustion process, to preheat the vapours destined for combustion and, subsequently, of the percolate to be extracted from the settling tanks.

Another aim of the present invention is to allow the realisation of plant in accordance with the above method, consisting of a percolate settling tank fitted with a percolate drawing off pipe to conduct it to an appropriate mixing concentrator supplied with a stream of hot air and equipped with a sloping bottom surface to collect the concentrated percolate: between the sections of the said mixing concentrator, through which are conducted both the percolate to be concentrated and stream of hot air, is inserted the end of a pipe to draw off the vapours, the other end of which pipe communicates with the combustion chamber for oxidation of the extracted vapours.

In the version of the plant for oxidation of the vapours at ambient temperature, it is arranged that the vapours extracted by the said mixing concentrator are vented directly to the atmosphere.

The advantages of this invention are:

high efficiency of the disposal plant with the possibility of treating considerable flows of liquid percolate; economical operation, due mainly to the restriction of heat levels, with the consequent possibility of using low grade, and therefore low cost, materials for the plant components; absence of harmful substances or compounds in the flue gases and consequent possibility of their direct release into the environment without the necessity for costly and cumbersome filtration equipment; possibility of the convenient use of the biogas produced in the dumps, which biogas is not otherwise always economically usable.

Other aims and advantages will be disclosed by the specification which follows and by the attached drawings, which illustrate schematically and by way of example an embodiment of the method and plant in accordance with the object of the invention.

With reference to the said drawings:

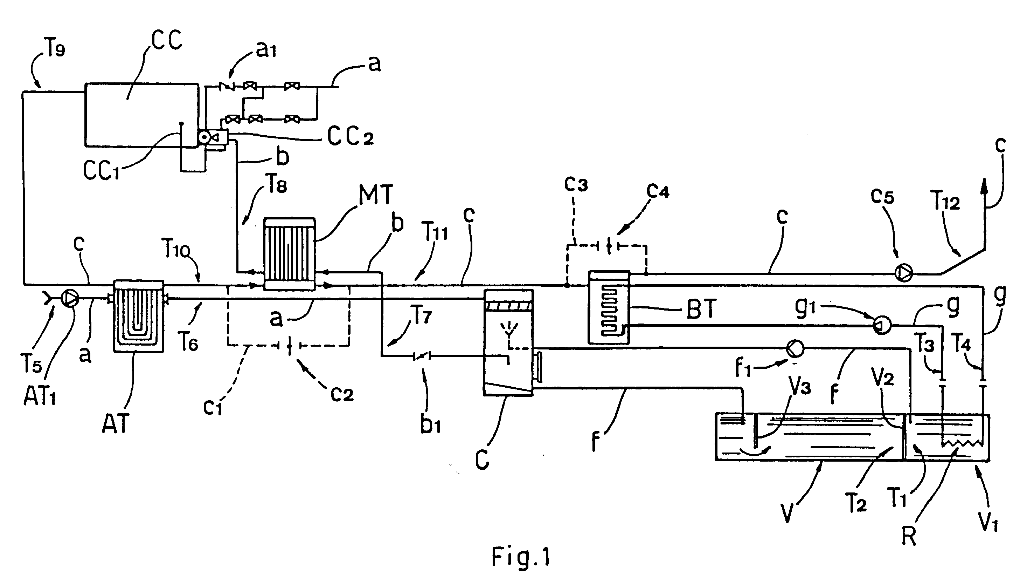

- Figure 1 is a schematic view of a plant with an oxidation stage by combustion of the vapours of the organic substances and preheating of the said vapours and the percolate;

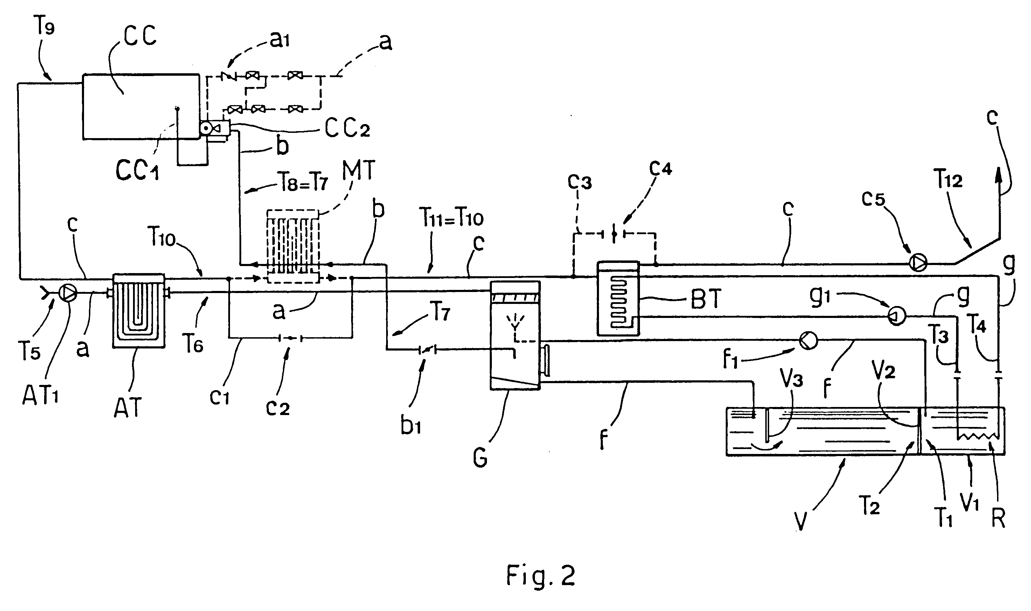

- Figure 2 is a schematic view of the plant without the flue gas/vapour heat exchanger;

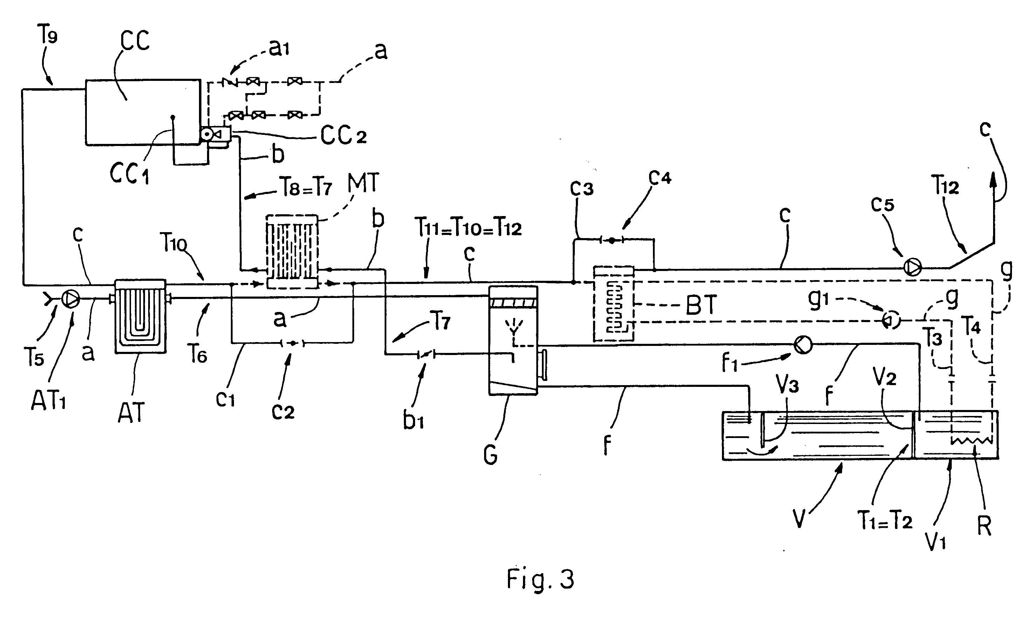

- Figure 3 is a schematic view of the plant without the flue gas/vapour and flue gas/liquid heat exchangers;
- Figure 4 is a vertical section, partially cut away and enlarged, of the percolate concentrator.

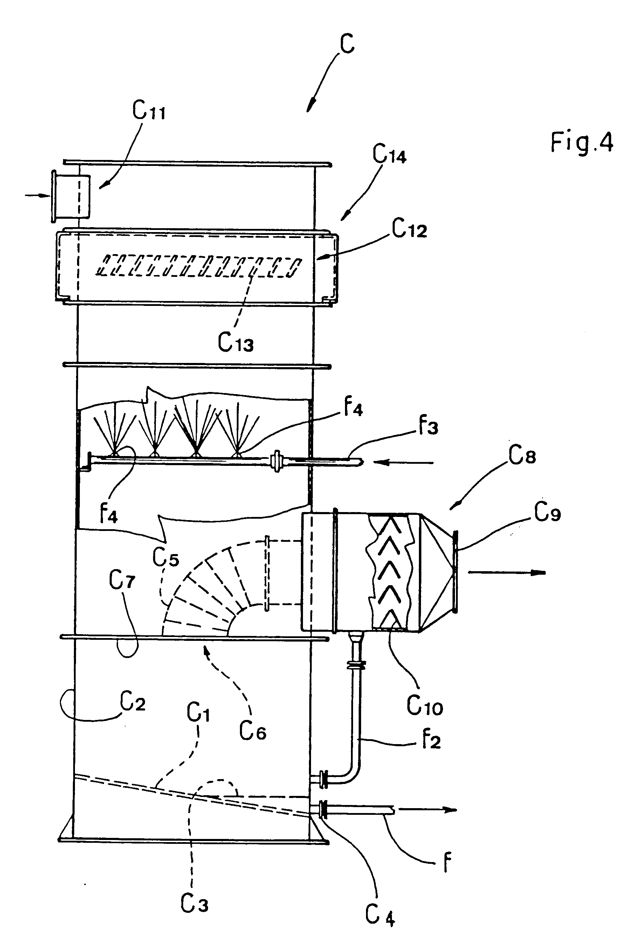

The following are indicated: CC, the combustion chamber; CC1, the probe to sense the temperature in the combustion chamber, CC, for controlling the flow rate of fuel to the burner CC2, advantageously of the air blast type; AT, the high temperature flue gas/air heat exchanger for preheating the feed air; AT1, the air fan to supply the exchanger AT; MT, the medium temperature flue gas/vapour heat exchanger for optionally preheating the mixture of water vapour and vapours of organic substances to be sent for oxidation by combustion; BT, the low temperature flue gas/liquid heat exchanger for optionally preheating the percolate; C, the percolate concentrator for mixing the percolate with the stream of hot air coming from exchanger AT; V, the percolate settling tank, communicating with the associated preheating chamber V1, equipped with heater R, via a weir V2; V3 a vertical dividing wall, with a gap at the bottom, between the feed chamber for the concentrated percolate from the mixing concentrator C and conducted to the settling tank; a, the fuel supply circuit to the combustion chamber CC; a1, a fuel flow control valve, installed in the associated supply circuit a; b, the feed pipes for the water vapour and the vapours of organic substances interconnecting the mixing concentrator C with the exchanger MT and this latter component with the combustion chamber CC; b1, a valve to control the flow rate of the gaseous mixture consisting of water vapour, vapours of organic substances and air, installed in the section of pipe b between the percolator mixing concentrator C and the flue gas/vapour heat exchanger MT; c, the circuit for the circulation of the flue gases extracted from the combustion chamber CC to the succession of exchangers AT, MT, BT for subsequent venting to the atmosphere; c1, a by-pass in pipe c interconnecting the inlet and outlet sections of the flue gas/vapour exchanger MT, for optionally shutting off the exchanger from the flue gas circulation circuit; c2, the associated air flow stop valve; c3, a by-pass in pipe c interconnecting the sections of c upstream and downstream from the heat exchanger BT for optionally shutting off this exchanger from the flue gas circulation circuit; c4, the associated flue gas flow stop valve; c5, a fan to draw the flue gases along the final section of circuit c and to send them to the stack; d, the pipes to supply air to the exchanger AT and from there to the mixing concentrator C; f, the pipes for the extraction of the percolate from the settling tank V to supply the said concentrator and for return from the concentrator to the settling tank of the percolate which has been concentrated with the heavier pollutant particles; f1, the percolate suction pump installed in the associated pipe f for the extraction of the percolate; g, the feed and return pipes for the percolate preheating liquid, for example water, interconnecting the percolate heater R with the associated exchanger BT; g1, the associated circulation pump for the exchange liquid for preheating the percolate; T1, the percolate preheating temperature; T2, the associated settling temperature; T3, the temperature of the exchange liquid on leaving the heater R; T4, the temperature of the said liquid on entry into heater R; T5, the air intake temperature to the associated exchanger AT; T6, the air temperature on leaving the said exchanger; T7, the temperature of the mixture of water vapour and vapours of organic substances on leaving the associated concentrator C; T8, the temperature of the said mixture on entry into the combustion chamber CC; T9, the temperature of the flue gases on leaving the said combustion chamber; T10, the temperature of the flue gases from the said combustion chamber on leaving flue gas/air exchanger AT; T11,

EP 0 524 159 B1

the temperature of the flue gases on leaving the flue gas/vapour exchanger MT; T12, the temperature at which the flue gases are vented to the atmosphere on leaving the flue gas/liquid exchanger BT; the values of temperatures T1, T2 varying principally in dependance on the external ambient temperature and the degree of agitation of the percolate within the settling tank; the value of the air intake temperature T5 being highly variable depending on the location of the plant and the associated climatic conditions; C1 (figure 4), the base of the concentrator C, sloping towards the side wall C2 of the concentrator to direct the percolate C3, the concentration of which in the heavier pollutants has been increased, towards the associated discharge orifice C4, into which is inserted the extraction pipe f for the return of this percolate to the settling liquid; C5, the pipe for the drawing off the water vapour and vapours of volatile organic substances from the concentrator C, which pipe consists of an end section inside the body of the concentrator having a curved, downwards facing elbow equipped with an associated intake orifice C6, advantageously located in a horizontal plate resting in the lower-mid part in height of the body of the concentrator C and coaxial with it; C7, the optional transverse support for pipe C5 to the body C2 of the concentrator C; C8, a droplet sepatator fitted at the external end of the drawing off pipe C5 at a level with the side wall of the body C2 of the concentrator, which separator consists of a housing C9, tapered at its far end to connect with pipe b which feeds the vapours to the combustion chamber CC, there being within the separator a droplet interception surface consisting of a vertical arrangement of crosspieces C10, each crosspiece being formed by a pair of pitched surfaces converging at the top so as to form a plurality of short, superposed deviated passages to achieve the inertial separation of the droplets against the pitched surfaces: the vapour being drawn out from within the concentrator due to the effect of the negative pressure maintained within the flue gas circulation circuit by the associated fan c5; f2, an outlet pipe for the droplets collected from the bottom of the associated separator C8 and for their return inside the lower part of the body C2 of the connector C; f3, the end section of pipe f which draws off the percolate from the settling tank V, inserted tranversally into the body of the said concentrator above the vapour drawing off pipe C5: the said end section being equipped with a plurality of spray jets f4 to disperse the percolate as minute droplets having a component of motion advantageously contrary to the motion of the stream of hot air; C11, the inlet section for hot air into the concentrator C at the upper end of the concentrator body C2; C12, a distributor of air within the concentrator body, which distributor is fitted transversally between the air inlet section C11 and the arrangement of spray jets f4 and which consists of an array[1] of blades C13 to deflect the hot air coming from the flue gas/air exchanger AT, the said blades being inclined in relation to the vertical axis of the concentrator C, the ends of the blades being attached to an associated peripheral support C14, itself attached to the external side wall of the concentrator body C2: the said deflecting crosspieces conferring a downwards vortical motion to the stream of hot air in order to improve the exchange of heat with the minute droplets of percolate released into the fluid blast by the spray jets f4.

In the plant diagram for the version of the method with oxidation of the vapours of organic substances at ambient temperature, it is arranged that the air entering the concentrator C is heated by means of an independent source of heat, which source may also be sufficient to supply the exchanger BT.

4

**Example 1**

Temperature (T9) of flue gases on leaving combustion chamber between 450 °C and 500 °C.

Percolate preheating temperature (T1)                                10-60°C

Percolate settling temperature (T2)                                  10-35°C

Temperature (T3) of exchange liquid on leaving

percolate heater                                                     75-80°C

Temperature (T4) of exchange liquid on entry to

percolate heater                                                     85-90°C

Annual average (T5) of ambient temperature                           20°C

Temperature (T6) of air on entry to concentrator   180-260°C

Temperature (T7) of mixture of water vapour and vapours of organic substances on leaving concentrator 50-60°C

Temperature (T8) of vapour to be oxidised on entry

to combustion chamber                                           80-180°C

Temperature (T10) of flue gases on leaving

flue gas/air exchanger                                          280-350°C

Temperature (T11) of flue gases on leaving


flue gas/vapour exchanger                                       180-220°C

Venting temperature (T12) of flue gases                        140-170°C


**Example 2**

Temperature of flue gases on leaving combustion chamber (T9) between 300 °C and 450 °C; no vapour preheating stage on leaving concentrator (C) and direct introduction of vapours into combustion chamber.

| | |
|---|---|
| Percolate preheating temperature (T1) | 10-60°C |
| Percolate settling temperature (T2) | 10-35°C |
| Temperature (T3) of exchange liquid on leaving percolate heater | 60-75°C |
| Temperature (T4) of exchange liquid on entry to percolate heater | 70-85°C |
| Annual average (T5) of ambient temperature | 20°C |
| Temperature (T6) of air on entry to concentrator | 120-180°C |
| Temperature (T7 = T8) of mixture of water vapour and vapours of organic substances on leaving concentrator | 40-50°C |
| Temperature (T10 = T11) of flue gases on leaving flue gas/air exchanger | 160-350°C |
| Venting temperature (T12) of flue gases | 100-140°C |

Example 3

Temperature of flue gases on leaving combustion chamber (T9) between 150°C and 300°C; no vapour preheating stage on leaving concentrator nor percolate preheating stage.

| | |
|---|---|
| Temperature (T1 = T2 = T3 = T4) of percolate in collecting tank | 10-35°C |
| Annual average (T5) of ambient temperature | 20°C |
| Temperature (T6) of air on entry to concentrator | 80-120°C |
| Temperature (T7 = T8) of mixture of water vapour and vapours of organic substances on leaving concentrator | 30-40°C |
| Temperature (T10 = T11 = T12) of flue gases on leaving flue gas/air exchanger | 80-100°C |

The exchange of heat within the mixing concentrator C (Figure 4) proceeds in the following manner: the percolate, drawn up from the settling tank V by the associated pump f1, is introduced into the concentrator in the form of minute droplets sprayed upwards by the sprays f4 countercurrently to the stream of hot air introduced from above through the associated inlet section C11, to which air is imparted a downwards vortical motion by the deflecting blades C13: the mixture of water and volatile organic substances obtained

6

by the heat exchange between the percolate and hot air, driven down towards the lower part of the concentrator, is drawn off through the associated elbowed vapour extraction pipe C5 by the negative pressure maintained in the flue gas circulation circuit by means of the fan c5, while the non-evaporated liquid, consisting of percolate with a high concentration of heavy pollutants, is collected on the base C1 in order to be returned to the percolate settling tank, together with the droplets entrained by the gaseous mixture and extracted by the droplet separator C8.

In practice, the materials, dimensions and details of execution may be different from, but technically equivalent to, those stated without falling outside the legal scope of this invention.

Thus, the temperatures of the percolate and exchange fluids may also be appreciably different from those stated, due for example to the atmosphere or climatic conditions prevailing at the location in which the method is realised, or because of design choices made for the associated plant, without this comprising a substantial alteration of the method itself.

## Claims

1.  METHOD for the disposal of the liquid from the bottom of dumping tanks for solid urban refuse, characterised in that it proceeds according to the stages stated below:

    A) Drawing off the liquid consisting of the already settled percolate and concentration of said liquid through mixing with a stream of hot air that causes the evaporation of water as well as of volatile organic substances dissolved into the percolate.

    B) Separation of the percolate concentrated in this manner from the saturated air containing water vapours and vapours of organic substances for the subsequent oxidation of these latter substances in a suitable combustion chamber and return of the concentrated percolate to the bottom of the dumping tank where the settling out proceeds.

    C) Extraction of the residual sludge deposited during settling of the percolate for subsequent dispatch to toxic waste storage facilities, the heavier pollutants having been concentrated in the sludge.

2.  Method according to claim 1, characterised in that oxidation of the vapours of organic substances occurs by combustion at temperatures between 150°C and 500°C, with optional recirculation of the flue gases in order to preheat the vapours to be sent for combustion and the percolate stored in the settling tanks.

3.  Method according to claim 2, characterised in that, a combustion temperature of between 450°C and 500°C being arranged, the temperatures of the exchange fluids and the percolate are:

| | |
|---|---|
| Percolate preheating temperature (T1) | 10-60°C |
| Percolate settling temperature (T2) | 10-35°C |
| Temperature (T3) of exchange liquid on leaving percolate heater | 75-80°C |
| Temperature (T4) of exchange liquid on entry to percolate heater | 85-90°C |
| Annual average (T5) of ambient temperature | 20°C |
| Temperature (T6) of air on entry to concentrator | 180-260°C |
| Temperature (T7) of mixture of water vapour and vapours of organic substances on leaving concentrator | 50-60°C |
| Temperature (T8) of vapour to be oxidised on entry to combustion chamber | 80-180°C |
| Temperature (T10) of flue gases on leaving flue gas/air exchanger | 280-350°C |
| Temperature (T11) of flue gases on leaving flue gas/vapour exchanger | 180-220°C |
| Venting temperature (T12) of flue gases | 140-170°C |

4. Method according to claim 2, characterised in that, a combustion temperature of between 300°C and 450°C being arranged with no vapour preheating stage on leaving the concentrator (C), the temperatures of the exchange fluids and the percolate are:

| | |
|---|---|
| Percolate preheating temperature (T1) | 10-60°C |
| Percolate settling temperature (T2) | 10-35°C |

Temperature (T3) of exchange liquid on leaving

percolate heater                                    60-75°C

Temperature (T4) of exchange liquid on entry to

porcolate heater                                    70-85°C

Annual average (T5) of ambient temperature           20°C

Temperature (T6) of air on entry to

concentrator                                       120-180°C

Temperature (T7 = T8) of mixture of water vapour and vapours of organic substances on leaving

concentrator                                         40-50°C

Temperature (T10 = T11) of flue gases on leaving

flue gas/air exchanger                             160-350°C

Venting temperature (T12) of flue gases           100-140°C


5. Method according to claim 2, characterised in that, a combustion temperature of between 150°C and 300°C being arranged with no vapour preheating stage on leaving the concentrator (C) nor percolate preheating stage, the temperatures of the exchange fluids and the percolate are:

Temperature (T1 = T2) of percolate in

collecting tank (V)                                 10-35°C

Annual average (T5) of ambient temperature           20°C

Temperature (T6) of air on entry to

concentrator                                        80-120°C

Temperature (T7 = T8) of mixture of water vapour and vapours of organic substances on leaving

concentrator                                         30-40°C

Temperature (T10 = T11 = T12) of flue gases on leaving

flue gas/air exchanger                              80-100°C


6. Plant in accordance with the method according to claim 1, characterised in that it consists of a percolate settling tank fitted with a percolate drawing off pipe to conduct it to a mixing concentrator supplied with a stream of hot air and equipped with a sloping bottom surface to collect the concentrated percolate: between the sections of the said mixing concentrator, through which are conducted both the percolate to be concentrated and the stream of hot air, there being inserted the end of a pipe to draw off the vapours, the other end of which pipe communicates with the combustion chamber.

7. Plant according to claim 6, characterised in that between the sections of the said mixing concentrator, through which are conducted both the percolate to be concentrated and the stream of hot air, is inserted the end of a pipe to draw off the vapours, which pipe communicates with the outside environment.

8. Plant according to claim 6, characterised in that, there being a feed pipe for the hot air stream mixing concentrator (C) at the upper end of the concentrator, with extraction of the vapour by means of a pipe at the mid point of the concentrator, the percolate settling tank (V) communicates by means of a substantially vertical separating wall (V3) with a gap at the bottom with the feed chamber for the concentrated percolate (C3) extracted from the mixing concentrator.

9. Plant according to claim 8, characterised in that the said percolate settling tank (V) communicates with the associated preheating chamber by means of a weir (V2) in order to house in this chamber a heater (R), which is fitted in an associated exchange liquid circulation circuit (g), into which liquid is transferred heat by means of a flue gas/liquid exchanger (BT) fitted in the flue gas circulation circuit (c), advantageously in the section of this circuit immediately upstream from the stack.

10. Plant according to claim 6, characterised in that the mixing concentrator (C) consists of a hollow body (C2), elongated along its vertical axis, having a base (C1) inclined downwards towards the outside to make the percolate (C3), the concentration of which in the heavier pollutants has been increased, flow towards the discharge orifice (C4), into which is inserted the extraction pipe (f) for the return of the said percolate to the settling liquid.

11. Plant according to claim 10, characterised in that, within the body (C2) of the said mixing concentrator is inserted a pipe (C5) for drawing of the water vapour and vapours of volatile organic substances, which pipe consists of an end section having a curved elbow advantageously turned in the opposite direction to the hot air inlet pipe, which elbow is equipped with an appropriate intake orifice (C6), advantageously located in a horizontal plate resting in the lower-mid part in height of the concentrator.

12. Plant according to claim 11, characterised in that in the external end section of the pipe for drawing off the vapours (C5), close to the side surface of the body of the mixing concentrator (C) is fitted a droplet separator consisting of a housing (C9), tapered at its far end to connect with pipe b which feeds the vapours to the combustion chamber (CC), there being within the separator a droplet interception surface: from the bottom of the said housing there leading a discharge pipe (f2), the other end of which is inserted into the body of the concentrator (C) close to the bottom of it.

13. Plant according to claim 12, characterised in that the said droplet interception surface consists of a vertical arrangement of horizontal crosspieces (C10), each crosspiece consisting of a pair of pitched surfaces converging at the top having a the cross-section of an upturned 'V', so as to form a plurality of longitudinal passages with vertically deviated flow.

14. Plant according to claim 11, characterised in that between the vapour extraction pipe (C5) and the air supply orifice (C11) is inserted tranversally into the said mixing concentrator the end section (f3) of the pipe (f) for drawing off the percolate from the settling tank (V): the said pipe being equipped with spray jets (f4) to disperse the liquid as minute droplets having a component of motion advantageously opposed to the motion of the stream of hot air.

15. Plant according to claim 14, characterised in that between the air supply orifice (C11) and the pipe supplying the percolate to the concentrator (C) is inserted an air distributor (C12) consisting of an array (C13) of horizontal air flow deflection blades to impart a downwards vortical motion, the ends of which blades are attached to an appropriate peripheral support (C14).

16. Plant according to claim 6, characterised in that in the section of the vapour drawing off pipe (b) between the mixing concentrator (C) and the combustion chamber is fitted a flue gas/vapour heat exchanger (MT) to preheat the vapours by means of the combustion products.

17. Plant according to claim 6, characterised in that in the section of the flue gas circulation circuit (c) immediately downstream from the combustion chamber (CC) is fitted a flue gas/air heat exchanger (AT) to heat the air sent to the mixing concentrator (C).

18. Plant according to claim 9, characterised in that in the flue gas circulation circuit (c) is fitted a by-pass (c3), equipped with an appropriate stop valve (c4), interconnecting the sections upstream and downstream from the flue gas/liquid exchanger (BT).

19. Plant according to claim 16, characterised in that in the flue gas circulation circuit (c) is fitted a by-pass (c1), equipped with an appropriate stop valve (c2), interconnecting the sections upstream and downstream from the flue gas/vapour exchanger (MT).

## Patentansprüche

1. Methode zur Entsorgung der Bodenflüssigkeit in den Entladebecken für Stadtmüll gekennzeichnet durch den Vorgang, dessen Phasen hier dargestellt werden:
   A. Entnahme der schon geklärten Sickerflüssigkeit zwecks deren folgenden Konzentration. Sie wird vorteilhaft mit warmer Luft gemischt, um die Verdunstung eines Wasseranteils und flüchtiger organischer Substanzen zu erhalten, bis die vorgesehene Verdickung erreicht wird.
   B. Trennung der konzentrierten Sickerflüssigkeit, ihre Wiedereinleitung in die sich in der Klärung befindlichen Flüssigkeit und Auszug der mit Wasserdampf und Dämpfen organischer Substanzen gesättigten Luft zur Oxydation der letzteren.
   C. Periodische oder gelegentliche Entnahme des bei der Klärung der Sickerflüssigkeit abgesetzten Schlammrestes, der mit Schadstoffen größeren Gewichtes angereichert ist, zu dessen folglicher Versendung an die Lagerstätten für giftige Abfälle.

2. Methode gemäß dem Anspruch 1 dadurch gekennzeichnet, daß die Oxydation der Dämpfe organischer Substanzen durch Verbrennung bei Temperaturen zwischen 150°C und 500°C erfolgt, wobei der Rauch zur Vorwärmung der zur Verbrennung bestimmten Dämpfe und der im Klärbecken gelagerten Sickerflüssigkeit eventuell wieder rückgeleitet wird.

3. Methode gemäß dem Anspruch 2 dadurch gekennzeichnet, daß die Temperaturen der Austauschflüssigkeiten und der Sickerflüssigkeit bei einer vorgesehenen Verbrennungstemperatur zwischen 450°C und 500°C die nachstehenden Werte haben:

| | |
|---|---|
| Vorwärmtemperatur (T1) der Sickerflüssigkeit | 10-60°C |
| Klärtemperatur (T2) der Sickerflüssigkeit | 10-35°C |
| Temperatur der Austauschflüssigkeit (T3) bei Austritt aus dem Sickerflüssigkeitserwärmer | 75-80°C |
| Temperatur der Austauschflüssigkeit (T4) bei Eintritt in den Sickerflüssigkeitserwärmer | 85-90°C |
| Jährlicher Durchschnittswert (T5) der Umwelttemperatur | 20°C |
| Lufttemperatur (T6) bei Eintritt in den Konzentrator | 180-260°C |
| Temperatur (T7) der Mischung von Wasserdampf und den Dämpfen der organischen Substanzen am Ausgang des Konzentrators | 50-60°C |
| Temperatur (T8) des zu oxydierenden Dampfes beim Eintritt in die Verbrennungskammer | 80-180°C |
| Temperatur (T10) des Rauches bei Austritt aus dem Rauch-Luft-Wärmetauscher | 280-350°C |
| Temperatur (T11) des Rauches bei Austritt aus dem Rauch-Dampf-Wärmetauscher | 180-220°C |
| Temperatur (T12) beim Ablassen des Rauches | 140-170°C |

EP 0 524 159 B1

4. Methode gemäß dem Anspruch 2 dadurch gekennzeichnet, daß die Temperaturen der Austauschflüssigkeiten und der Sickerflüssigkeit bei einer vorgesehenen Verbrennungstemperatur zwischen 300°C und 450°C und unter Ausschluß der Vorwärmphase der Dämpfe beim Austritt aus dem Konzentrator (C) die nachstehenden Werte haben:

| | |
|---|---|
| Vorwärmtemperatur (T1) der Sickerflüssigkeit | 10-60°C |
| Klärtemperatur (T2) der Sickerflüssigkeit | 10-35°C |
| Temperatur der Austauschflüssigkeit (T3) bei Austritt aus dem Sickerflüssigkeitserwärmer | 60-75°C |
| Temperatur der Austauschflüssigkeit (T4) bei Eintritt in den Sickerflüssigkeitserwärmer | 70-85°C |
| Jährlicher Durchschnittswert (T5) der Umwelttemperatur | 20°C |
| Lufttemperatur (T6) bei Eintritt in den Konzentrator | 120-180°C |
| Temperatur (T7 = T8) der Mischung von Wasserdampf und den Dämpfen der organischen Substanzen am Ausgang des Konzentrators | 40-50°C |
| Temperatur (T10 = T11) des Rauches bei Austritt aus dem Rauch-Luft-Wärmetauscher | 160-350°C |
| Temperatur (T12) beim Ablassen des Rauches | 100-140°C |

5. Methode gemäß dem Anspruch 2 dadurch gekennzeichnet, daß die Temperaturen der Austauschflüssigkeiten und der Sickerflüssigkeit bei einer vorgesehenen Verbrennungstemperatur zwischen 150°C und 300°C und unter Ausschluß der Vorwärmphase der Dämpfe beim Austritt aus dem Konzentrator (C) und unter Ausschluß der Vorwärmphase der Sickerflüssigkeit die nachstehenden Werte haben:

| | |
|---|---|
| Temperatur (T1 = T2) der Sickerflüssigkeit im Aufnahmebecken (V) | 10-35°C |
| Jährlicher Durchschnittswert (T5) der Umwelttemperatur | 20°C |
| Lufttemperatur (T6) bei Eintritt in den Konzentrator | 80-120°C |
| Temperatur (T7 = T8) der Mischung von Wasserdampf und den Dämpfen der organischen Substanzen am Ausgang des Konzentrators | 30-40°C |
| Temperatur (T10 = T11 = T12) des Raucheablasses bei Austritt aus dem Rauch-Luft-Wärmetauscher | 80-100°C |

6. Anlage in Verwirklichung der Methode gemäß dem Anspruch 1 dadurch gekennzeichnet, daß sie aus einem Klärbecken für die Sickerflüssigkeit besteht, welches mit einer Absaugleitung für die besagte Flüssigkeit zwecks Zuleitung an einen Mischungskonzentrator, der mit warmer Luft versorgt wird und eine abfallende Bodenoberfläche zur Sammlung der konzentrierten Sickerflüssigkeit besitzt, ausgestattet ist. Die konzentrierte Sickerflüssigkeit wird zwischen den Abschnitten besagten Mischungskonzentrators, in die jeweils die zu konzentrierende Sickerflüssigkeit und der Zufluß warmer Luft eingeleitet wird, eingesammelt, wobei ein Rohr zur Absaugung der Dämpfe, das an seinem anderen Ende mit der Verbrennungskammer verbunden ist, eingeführt ist.

7. Anlage gemäß dem Anspruch 6 dadurch gekennzeichnet, daß zwischen den Abschnitten besagten Mischungskonzentrators, in die jeweils die zu konzentrierende Sickerflüssigkeit und die warme Luft eingeleitet werden, ein Rohr zur Absaugung der Dämpfe, das mit der Außenwelt verbunden ist, eingeführt ist.

8. Anlage gemäß dem Anspruch 6 dadurch gekennzeichnet, daß das Klärbecken (V) der Sickerflüssigkeit über eine vornehmlich senkrechte und unterhalb unterbrochene Scheidewand (V3) mit der Versorgungskammer der konzentrierten Sickerflüssigkeit (C3), die aus dem Mischungskonzentrators entnommen wird, verbunden ist, wobei eine Versorgungszufuhr des Mischungskonzentrators (C) vorgesehen ist, die über einen Fluß warmer Luft am oberen Ende des Konzentrators erfolgt und bei dem der Abzug des Dampfes über eine diesbezügliche Leitung im mittleren Abschnitt des besagten Konzentrators erfolgt.

12

**9.** Anlage gemäß dem Anspruch 8 dadurch gekennzeichnet, daß besagtes Klärbecken (V) für Sickerflüssigkeit mit diesbezüglicher Vorwärmkammer mittels der Wehr (V2) verbunden ist. In dieser Vorwärmkammer befindet sich ein Heizgerät (R), das Bestandteil eines entsprechenden Tauscherflüssigkeitumlaufkreises (g) ist, und an den die Wärme über einen Rauch-Flüssigkeit-Wärmetauscher (BT) abgegeben wird, der wiederum Bestandteil des Rauchumlaufes (c) ist, der sich vorteilhaft im Anfangsbereich des Kamins befindet.

**10.** Anlage gemäß dem Anspruch 6 dadurch gekennzeichnet, daß der Mischungskonzentrator (C) aus einem hohlen, senkrechten, langen Körper (C2) mit einem nach außen abfallenden Boden (C1) zum Ableiten der Sickerflüssigkeit (C3) besteht. Diese Sickerflüssigkeit, welche mit Schadstoffen größeren Gewichtes angereichert ist, kann so zu dem Auslasstutzen (C4), in den das entsprechende Abführrohr (f) zwecks Wiedereinleitung besagter Sickerflüssigkeit in die zu klärende Flüssigkeit eingesteckt ist, abfließen.

**11.** Anlage gemäß dem Anspruch 10 dadurch gekennzeichnet, daß im Innern des Körpers (C2) besagten Mischungskonzentrators ein Rohr (C5) zur Absaugung von Wasserdampf und Dämpfen flüchtiger organischer Substanzen eingefügt ist. Es besteht aus einem kurvenförmigen Rohrknie, das in die entgegengesetzte Richtung gegenüber dem Einlaßbereich der Warmluft gerichtet ist und mit einer Ansaugöffnung (C6) ausgestattet ist, die sich vorteilhaft in einer horizontalen Ebene im mittleren - unteren Teil des sich in die Höhe entwickelten Konzentrators befindet.

**12.** Anlage gemäß dem Anspruch 11 dadurch gekennzeichnet, daß auf dem äußeren Endstück besagten Rohrs (C5) zur Absaugung der Dämpfe in der Nähe der Seitenoberfläche des Körpers des Mischungskonzentrators (C) ein Tropfenabscheider eingesetzt ist. Er besteht aus einer Hülle (C9) und verjüngt sich hinten, um sich mit der Leitung (b) zur Dampfversorgung der Verbrennungskammer (CC) zu verbinden. Er ist intern mit einer Tropfenabscheidungsfläche ausgestattet. Vom Boden besagter Hülle geht ein Ablaßrohr (f2) aus, das an seinem anderen Ende in den Konzentratorkörper (C) in der Nähe seines Bodens eingefügt ist.

**13.** Anlage gemäß dem Anspruch 12 dadurch gekennzeichnet, daß besagte Tropfenabscheidungsfläche aus einem Gebilde horizontaler Querleisten (C10) besteht, die in die Höhe verteilt sind, wobei jede Querleiste aus einem Paar nach oben konvergierender Walmflächen in umgekehrter V-Form besteht, um mehrfache Längsleitungen zum senkrechten Abfluß zu schaffen.

**14.** Anlage gemäß dem Anspruch 11 dadurch gekennzeichnet, daß zwischen dem Rohr (C5) zur Absaugung der Dämpfe und der Öffnung (C11) zur Luftversorgung das Rohrendstück (f3) des Rohres (f) zur Absaugung der Sickerflüssigkeit aus dem Klärbecken (V) in den besagten Mischungskonzentrator quer eingefügt ist. Besagtes Rohr ist mit Spritzdüsen (f4) zur Verteilung der Flüssigkeit in kleinen Tropfen ausgestattet, wobei die Bewegungskomponente vorteilhaft die der des Warmluftabflusses entgegengesetzt ist.

**15.** Anlage gemäß dem Anspruch 14 dadurch gekennzeichnet, daß zwischen der Öffnung (C11) zur Luftversorgung und dem Rohr zur Versorgung des Konzentrators (C) mit Sickerflüssigkeit ein Luftverteiler (C12) eingefügt ist, der aus einem Strahlenkranz (C13) aus orientierbaren den Luftstrom ablenkenden Flügelblättern besteht, welche dem Luftstrom eine nach unten gerichtete Wirbelbewegung verleihen, während die Enden des Strahlenkranzes an einer entsprechenden äußeren Halterung (C14) befestigt sind.

**16.** Anlage gemäß dem Anspruch 6 dadurch gekennzeichnet, daß auf einem Teil des Dämpfeabsaugrohres (b) zwischen dem Mischungskonzentrator (C) und der Verbrennungskammer ein Rauch-Dampf-Wärmetauscher (MT) zur Vorwärmung der Dämpfe durch die Verbrennungsprodukte eingefügt ist.

**17.** Anlage gemäß dem Anspruch 6 dadurch gekennzeichnet, daß auf einem Teil des Rauchumlaufes (c) direkt unterhalb der Verbrennungskammer (CC) ein Rauch-Luft-Wärmetauscher (AT) zur Aufwärmung der dem Mischungskonzentrator (C) zugeführten Luft eingefügt ist.

**18.** Anlage gemäß dem Anspruch 9 dadurch gekennzeichnet, daß im Verlauf des Rauchumlaufes (c) eine Ableitung (c3) eingefügt ist, die mit einem Sperrventil (c4) ausgestattet ist und die die Abschnitte

EP 0 524 159 B1

oberhalb und unterhalb des Rauch-Flüssigkeits-Wärmetauschers (BT) miteinander verbindet.

19. Anlage gemäß dem Anspruch 16 dadurch gekennzeichnet, daß auf dem Rauchumlauf (c) eine Ableitung (c1) eingefügt ist, die mit einem Sperrventil (c2) ausgestattet ist und die die Abschnitte oberhalb und unterhalb des Rauch-Dampf-Wärmetauschers (MT) miteinander verbindet.

**Revendications**

1. Méthode pour l'évacuation du liquide de fond dans les bassins de décharge des ordures ménagères des villes caractérisée en ce qu'elle comporte les différentes étapes indiquées ci-après:

A. Prélèvement du liquide de percolation, déjà décanté, qui est ensuite avantageusement concentré par malaxage avec un flux d'air chaud pour obtenir l'évaporation d'un pourcentage d'eau et de matières organiques volatiles déterminable en fonction du degré de concentration prévu.

B. Séparation du liquide de percolation ainsi concentré, ré-introduction de ce dernier dans le liquide en décantation et extraction de l'air saturé contenant de la vapeur d'eau et des vapeurs de matières organiques, pour la phase successive d'oxydation de ces dernières.

C. Extraction périodique ou intermittente du résidu boueux déposé dans la décantation du liquide de percolation, enrichi en polluants plus lourds, pour l'envoyer ensuite aux postes de stockage des déchets toxiques.

2. Méthode selon la revendication 1, caractérisée en ce que l'oxydation des vapeurs de matières organiques a lieu par combustion à des températures comprises entre 150°C et 500°C, avec recyclage éventuel des fumées pour obtenir le préchauffage des vapeurs à envoyer à la combustion et du liquide de percolation stocké dans les bassins de décantation.

3. Méthode, selon la revendication 2. caractérisée en ce que, comme la température de combustion est comprise entre 450°C et 500°C, les niveaux thermiques des fluides d'échange et du liquide de percolation sont les suivants:

| | |
|---|---|
| Température (T1) de préchauffage du percolat | 10-60°C |
| Température (T2) de décantation du percolat | 10-35°C |
| Température (T3) du liquide d'échange à la sortie de l'appareil de chauffe du percolat | 75-80°C |
| Température (T4) du liquide d'échange à l'entrée de l'appareil de chauffe du percolat | 85-90°C |
| Valeur moyenne annuelle (T5) de la température ambiante | 20°C |
| Température (T6) de l'air à l'entrée du concentrateur | 180-260°C |
| Température (T7) du mélange de vapeur d'eau et de vapeurs de matières organiques à la sortie du concentrateur | 50-60°C |
| Température (T8) de la vapeur à oxyder à l'entrée de la chambre de combustion | 80-180°C |
| Température (T10) des fumées à la sortie de l'échangeur fumées-air | 280-350°C |
| Température (T11) des fumées à la sortie de l'échangeur fumées-vapeur | 180-220°C |
| Température (T12) d'évacuation des fumées | 140-170°C |

4. Méthode, selon la revendication 2, caractérisée en ce que, comme la température de combustion est comprise entre 300°C et 450°C, avec élimination de la phase de préchauffage des vapeurs à la sortie du concentrateur (C), les niveaux thermiques des fluides d'échange et du liquide de percolation sont les suivants:

14

| Température (T1) de préchauffage du percolat | 10-60 °C |
|---|---|
| Température (T2) de décantation du percolat | 10-35 °C |
| Température (T3) du liquide d'échange à la sortie de l'appareil de chauffe du percolat | 60-75 °C |
| Température (T4) du liquide d'échange à l'entrée de l'appareil de chauffe du percolat | 70-85 °C |
| Valeur moyenne annuelle (T5) de la température ambiante | 20 °C |
| Température (T6) de l'air à l'entrée du concentrateur | 120-180 °C |
| Température (T7 = T8) du mélange de vapeur d'eau et de vapeurs de matières organiques à la sortie du concentrateur | 40-50 °C |
| Température (T10 = T11) des fumées à la sortie de l'échangeur fumées-air | 160-350 °C |
| Température d'évacuation des fumées (T12) | 100-140 °C |

5. Méthode selon la revendication 2, caractérisée en ce que, comme elle prévoit une température de combustion comprise entre 150°C et 300°C, avec élimination des phases de préchauffage des vapeurs à la sortie du concentrateur (C) et de préchauffage du liquide de percolation, les niveaux thermiques des fluides d'échange et du liquide de percolation sont:

| Température (T1 = T2) du percolat dans le bassin de stockage (V) | 10-35 °C |
|---|---|
| Valeur annuelle moyenne (T5) de la température ambiante | 20 °C |
| Température (T6) de l'air à l'entrée du concentrateur | 80-120 °C |
| Température (T7 = T8) du mélange de vapeur d'eau et de vapeurs de matières organiques à la sortie du concentrateur | 30-40 °C |
| Température (T10 = T11 = T12) d'évacuation des fumées à la sortie de l'échangeur fumées-air | 80-100 °C |

6. Installation pour l'application de la méthode selon la revendication 1, caractérisée en ce qu'elle est constituée par un bassin de décantation du liquide de percolation, équipé d'un conduit d'aspiration de ce dernier pour l'envoyer à un concentrateur à mélange alimenté par un flux d'air chaud, celui-ci présentant une superficie inférieure en pente pour le dépôt du percolat concentré; entre les secteurs de ce concentrateur à mélange où sont respectivement conduits le liquide de percolation à concentrer et le flux d'air chaud, est insérée l'extrémité d'un conduit d'aspiration des vapeurs, l'autre extrémité étant en communication avec la chambre de combustion.

7. Installation selon la revendication 6, caractérisée en ce que, entre les secteurs dudit concentrateur à mélange où sont respectivement conduits le liquide de percolation à concentrer et le flux d'air chaud, est insérée l'extrémité d'un conduit d'aspiration des vapeurs en communication avec le milieu extérieur.

8. Installation selon la revendication 6, caractérisée en ce que, comme elle prévoit un conduit d'alimentation du concentrateur (C) à mélange moyennant une arrivée d'air chaud introduit au niveau de l'extrémité supérieure de ce dernier, avec extraction de la vapeur par un conduit situé sur un secteur intermédiaire de ce concentrateur, le bassin (V) de décantation du liquide de percolation communique, par l'intermédiaire d'une cloison (V3) essentiellement verticale, tronquée dans sa partie inférieure, avec la chambre d'alimentation du percolat concentré (C3) extrait du concentrateur à mélange.

9. Installation, selon la revendication 8, caractérisée en ce que ce bassin (V) de décantation du liquide de percolation communique avec la chambre de préchauffage par l'intermédiaire d'un déversoir (V2) pour loger dans cette enceinte un appareil de chauffe (R), ce dernier faisant partie d'un circuit (g) de circulation du liquide d'échange, auquel est apportée de la chaleur par un échangeur (BT) fumées-liquide sur le circuit (c) de circulation des fumées, placé avantageusement sur le secteur de ce circuit situé immédiatement en amont de la cheminée.

EP 0 524 159 B1

**10.** Installation selon la revendication 6, caractérisée en ce que le concentrateur à mélange (C) est constitué par un corps (C2) creux, allongé, à axe vertical, ayant un fond (C1) incliné vers l'extérieur pour l'écoulement du liquide de percolation (C3) concentré en polluants plus lourds, vers la bouche de sortie (C4), sur laquelle est monté un conduit (f) d'extraction servant à ré-introduire ce percolat dans le liquide en décantation.

**11.** Installation selon la revendication 10, caractérisée en ce qu'à l'intérieur du corps (C2) de ce concentrateur à mélange, est monté un conduit (C5) d'aspiration de la vapeur d'eau et des vapeurs de matières organiques volatiles, constitué par une partie terminale ayant un axe coudé avantageusement orienté du côté opposé par rapport au secteur d'entrée de l'air chaud, avec une bouche d'aspiration (C6) avantageusement contenue dans un plan horizontal situé dans la partie médiane-inférieure de l'encombrement en hauteur de ce concentrateur.

**12.** Installation selon la revendication 11, caractérisée en ce que, à l'extrémité extérieure de ce conduit d'aspiration (C5) des vapeurs, à proximité de la superficie latérale du corps du concentrateur à mélange (C), est monté un séparateur de gouttes, constitué par une gaine (C9) en forme de tronc de cône à l'arrière pour se raccorder avec le conduit (b) d'abduction des vapeurs dans la chambre de combustion (CC), équipé à l'intérieur d'une surface d'arrêt des gouttes; du fond de cette gaine part un conduit (f2) d'évacuation dont l'autre extrémité est insérée dans le corps du concentrateur (C) à proximité du fond de ce dernier.

**13.** Installation selon la revendication 12, caractérisée en ce que cette superficie d'arrêt des gouttes est constituée par un ensemble de traverses horizontales (C10) réparties en hauteur, chaque traverse étant formée par deux pans convergents vers le haut ayant un secteur en "V" retourné pour former plusieurs conduits longitudinaux d'écoulement à déviation verticale.

**14.** Installation, selon la revendication 11, caractérisée en ce que, entre le conduit (C5) d'extraction des vapeurs et l'ouverture (C11) d'alimentation de l'air, est montée, transversalement, sur ce concentrateur à mélange l'extrémité (f3) du conduit (f) d'aspiration du percolat du bassin de décantation (V); ce conduit étant équipé de buses de pulvérisation (f4) qui dispersent le liquide sous forme de fines gouttelettes ayant une composante de mouvement avantageusement opposée à celle du flux de l'air chaud.

**15.** Installation selon la revendication 14, caractérisée en ce que, entre l'ouverture (C11) d'alimentation de l'air et le conduit d'alimentation du liquide de percolation dans le concentrateur (C), est monté un distributeur d'air (C12), constitué par un système rayonnant (C13) d'aubes horizontales déflectrices du flux d'air, pour former un mouvement tourbillonnant vers le bas, ayant ses extrémités fixées à un support périphérique (C14).

**16.** Installation selon la revendication 6, caractérisée en ce que sur la partie du conduit (b) d'aspiration des vapeurs comprise entre le concentrateur à mélange (C) et la chambre de combustion est monté un échangeur de chaleur (MI) fumées-vapeur pour le préchauffage des vapeurs par les produits de combustion.

**17.** Installation selon la revendication 6, caractérisée en ce que sur la partie du circuit (c) de circulation des fumées, immédiatement en aval de la chambre de combustion (CC) est monté un échangeur de chaleur (AT) fumées-air pour le chauffage de l'air envoyé au concentrateur à mélange (C).

**18.** Installation selon la revendication 9, caractérisée en ce que sur le circuit (c) de circulation des fumées, est montée une dérivation (c3) équipée d'une soupape d'arrêt (c4) reliant les secteurs en amont et en aval de l'échangeur (BT) fumées-liquide.

**19.** Installation selon la revendication 16, caractérisée en ce que sur le circuit (c) de circulation des fumées est montée une dérivation (c1), équipée d'une soupape d'arrêt (c2) connectant les secteurs en amont et en aval de l'échangeur (MT) fumées-vapeur.

16

Fig.1

EP 0 524 159 B1

Fig. 2

Fig. 3

Fig.4